Europäisches Patentamt

European Patent Office

Office européen des brevets

(11) Veröffentlichungsnummer: **0 199 708 B1**

# (12) EUROPÄISCHE PATENTSCHRIFT

(45) Veröffentlichungstag der Patentschrift: **21.11.91**

(21) Anmeldenummer: **86890093.7**

(22) Anmeldetag: **03.04.86**

Teilanmeldung 90106093.9 eingereicht am 03/04/86.

(51) Int. Cl.⁵: **B29C 67/18**, B29C 45/14, //B29L29:00

(54) **Verfahren zur Herstellung wenigstens zweilagiger Gegenstände.**

(30) Priorität: **15.04.85 AT 1123/85**

(43) Veröffentlichungstag der Anmeldung:
**29.10.86 Patentblatt 86/44**

(45) Bekanntmachung des Hinweises auf die Patenterteilung:
**21.11.91 Patentblatt 91/47**

(84) Benannte Vertragsstaaten:
**CH DE FR GB LI**

(56) Entgegenhaltungen:
CH-A- 572 390   CH-A- 644 057
DE-A- 1 813 915   DE-A- 2 039 998
DE-A- 2 856 618   GB-A- 977 975

(73) Patentinhaber: **Hirsch Armbänder Gesellschaft m.b.H.**
**Hirschstrasse 5**
**A-9021 Klagenfurt (Kärnten)(AT)**

(72) Erfinder: **Hirsch, Hermann**
**Hirschstrasse 5**
**A-9021 Klagenfurt(AT)**

(74) Vertreter: **Rau, Manfred, Dr. Dipl.-Ing. et al**
**Rau & Schneck, Patentanwälte Königstrasse 2**
**W-8500 Nürnberg 1(DE)**

## Beschreibung

Die Erfindung betrifft ein verfahren zur Herstellung von Uhrbändern bzw. Uhrbandteilen, die wenigstens eine Lage aus Leder und eine mit dieser Lage verbundene Lage aus Kunststoff aufweisen, wobei man die Lage aus Leder in Form eines Zuschnittes, dessen Umrißform der Umrißform der Ränder des herzustellenden Uhrbandes entspricht, einschließlich seiner Ränder innerhalb des Hohlraumes einer Form anordnet und in der Form durch Ansaugen an einer Wand des Formhohlraums festhält, wobei man den Zuschnitt im Formhohlraum mit dem Kunststoff verbindet, indem man in den Formhohlraum einen Kunststoff in fließfähigem Zustand oder in festem Zustand, vorzugsweise als Vorformling, den man wenigstens im Bereich seiner Oberfläche in einen plastischen Zustand überführt, einbringt und in den Zuschnitt teilweise eindringen läßt, und wobei man den Kunststoff um die Ränder des Zuschnitts aus Leder herumformt.

Bislang ist man bei der Herstellung von Uhrbändern, die aus Leder oder einem lederähnlichen Werkstoff und einer damit verbundenen Lage aus einem Kunststoff bestehen, so vorgegangen, daß man die beiden Lagen unter Zuhilfenahme eines Klebstoffes miteinander verbunden hat. Diese Verfahrensweise hat den Nachteil, daß die so erhaltenen, zusammengesetzten Uhrbänder in weiteren, u. U. recht aufwendigen Arbeitsschritten zu den endgültigen Uhrbändern verarbeitet werden müssen. Dabei ergeben sich zwangsweise Schnittkanten im Werkstoff aus Leder oder lederähnlichem Werkstoff, die wegen des dort möglichen Eintrittes von Feuchtigkeit in das Leder nachteilig sind.

Aus der CH-A-572 390 ist ein Verfahren zur Herstellung von Uhrbändern mit den Merkmalen des einleitenden Teils des Anspruches 1 bekannt. Bei dem aus der CH-A-572 390 bekannten Verfahren zur Herstellung von Uhrbändern werden die Ränder der Zuschnitte aus Leder nur teilweise vom Kunststoff bedeckt. Bei der in der CH-A-572 390 beschriebenen Arbeitsweise wird der Zuschnitt in der Form nur in seinem mittleren Bereich durch Ansaugen festgehalten, da im Randbereich keine Saugkanäle zum Festhalten des Zuschnittes vorgesehen sind oder sonstige andere Maßnahmen zum Festhalten des Randbereiches an der Wand der Form getroffen werden.

Der Erfindung liegt die Aufgabe zugrunde, ein Verfahren anzugeben, mit dem in einem einzigen Arbeitsschritt aus einer fertig zugeschnittenen und zugerichteten Lage aus Leder das wenigstens hinsichtlich seiner Form und Kontur fertige Uhrband erhältlich ist.

In Lösung dieser Aufgabe sieht die Erfindung vor, daß man dem Zuschnitt durch das Ansaugen an die Wand des Formhohlraumes und durch den in den Formhohlraum eingebrachten Kunststoff die im Uhrband vorliegende räumliche Querschnittsform erteilt, daß man die Ränder des Zuschnittes durch Ansaugen an eine Wand des Formhohlraumes an dieser Wand des Formhohlraumes festhält, und daß man den Kunststoff so um die Ränder des Zuschnittes herumformt, daß die Ränder des Uhrbandes teils durch den Zuschnitt und teils vom Kunststoff gebildet werden, und die Außenfläche des Zuschnittes mit der Außenfläche des Kunststoffes bündig verläuft.

Bei Anwendung des erfindungsgemäßen Verfahrens können weitgehend beliebige Zuschnitte aus Leder, so auch sehr dünne Leder (flämmige Leder) zu gebrauchsfertigen Uhrbändern verarbeitet werden. Nach dem erfindungsgemäßen Verfahren können nicht nur Zuschnitte aus Leder, sondern auch Zuschnitte aus lederähnlichen Werkstoffen verarbeitet werden. Der in der Beschreibung und in den Patentansprüchen verwendete Begriff "Leder" schließt daher lederähnliche Werkstoffe mit ein. Von besonderem Vorteil beim erfindungsgemäßen Verfahren ist es, daß die mit dem Leder verbundene Lage aus Kunststoff alle Schnittkanten und die Fleischseite der Lage aus Leder versiegelt. Dadurch ergibt sich nicht nur ein allseitiger Schutz der Lage aus Leder, sondern es ist auch eine formschlüssige Verbindung zwischen den beiden Lagen des erfindungsgemäß erhältlichen Uhrbandes oder Uhrbandteiles gewährleistet.

Für die Ausführung des erfindungsgemäßen Verfahrens gibt es verschiedene Möglichkeiten. So kann der Kunststoff in den Formhohlraum, in dem der oder die entsprechend zugerichteten Zuschnitte aus Leder zuvor eingebracht worden sind, durch Spritzgießen, durch Spritzprägen oder aber (insbesondere bei der Verarbeitung von Duroplasten) durch Gießen eingebracht werden. Wesentlich ist dabei, daß der Kunststoff in den Formhohlraum in einem derart fließfähigen Zustand eingebracht oder in der Form wenigstens oberflächlich fließfähig gemacht wird, daß er zur Erreichung der formschlüssigen Verbindung wenigstens teilweise in den Zuschnitt eindringen kann. Diese Fließfähigkeit des Kunststoffes kann bei Thermoplasten dadurch erreicht werden, daß sie entsprechend erwärmt werden, wobei Temperaturen zwischen 100 und 300°C, vorzugsweise etwa 200°C bevorzugt sind. Sinngemäßes gilt für thermoplastische Elastoplaste.

Bei Verwendung von härtenden Kunststoffen empfiehlt es sich, diese in Form eines Präpolymeren oder Monomeren in die Form einzubringen und diesen dann in der Form (durch Vernetzung) aushärten zu lassen.

In jedem Fall kann dem Kunststoff ein Treibmittel zugegeben werden, um zu gewährleisten, daß die Lage aus Kunststoff im fertigen Gegenstand eine Schaumstruktur besitzt.

Für die Ausführung des erfindungsgemäßen Verfahrens ist es zur Schonung der Lage aus Leder von Vorteil, wenn die Form auf nicht zu hohe Temperaturen aufgeheizt wird. Kurzfristig sind für echtes Leder Temperaturen bis 120°C möglich, ohne daß das Leder dauernd beschädigt wird. Es empfiehlt sich daher, bei der Ausführung des erfindungsgemäßen Verfahrens die Form nicht gesondert zu temperieren, sondern ihr Wärme ausschließlich über den mit einer Temperatur zwischen 100 und 300°C, beispielsweise etwa 200°C, eingebrachten Kunststoff zuzuführen. Es stellt sich dann im Arbeitszyklus ein Gleichgewicht zwischen zugeführter und abgeführter Wärme ein, wobei die Form die mittlere Temperatur von beispielsweise 40°C haben kann.

Für gewöhnlich wird bei der Ausführung des erfindungsgemäßen Verfahrens beim Spritzgießen im Formhohlraum ein Druck zwischen 100 und 1000 bar angewendet.

Die Formung des zunächst flachen Zuschnittes aus Leder erfolgt dadurch, daß der Zuschnitt durch Anlegen von Unterdruck an die entsprechend geformte Wand der Form angesaugt wird, wobei nach dem erfindungsgemäßen Verfahren die Ansaugöffnungen auch im Bereich der Außenränder des Zuschnittes aus Leder angeordnet sind. Zusätzlich wird dem Zuschnitt aus Leder beim erfindungsgemäßen Verfahren seine endgültige räumliche Form dadurch gegeben, daß der Zuschnitt durch den Fülldruck, unter dem der Kunststoff in die Form eingebracht wird, an die Formwand gedrückt wird.

Beim erfindungsgemäßen Verfahren wird also die Verformung der Lage aus Leder teils durch Ansaugen an die Formwand der Formhälfte und teils durch den Fülldruck des Kunststoffes bewirkt. Dabei wird man in der Regel bemüht sein so vorzugehen, daß die Verformung unter der Einwirkung des Druckes des Kunststoffes das Ausmaß der Dehnbarkeit des Zuschnittes aus Leder nicht überschreitet, damit dieser beim Einbringen des Kunststoffes in der Form keine Relativbewegung gegenüber der Formwand, insbesondere im Bereich ihrer Ränder ausführt.

Die endgültige Umrißform des Zuschnittes aus Leder kann vor dem Einlegen in die Form durch Stanzen oder Zuschneiden oder durch einen gleichzeitig mit der Schließbewegung der Form ausgeführten Stanzvorgang festgelegt werden. Auch Kombinationen sind möglich.

Mit dem erfindungsgemäßen Verfahren werden Uhrbänder erhalten, deren Form durch den mit der Lage aus Leder verbundenen Kunststoff bestimmt ist. Dadurch ist es möglich, aus flachen Lederzuschnitten praktisch jede beliebige Form herzustellen, wobei auch Wellungen, Uhrbänder mit unterschiedlicher Dicke usw. herstellbar sind.

Wenn ein thermoplastischer Kunststoff nach dem Spritzprägeverfahren verarbeitet wird, dann empfiehlt es sich, die Formwerkzeuge etwas vorzuwärmen, damit sich der Kunststoff beim Schließen der Form in der Form gleichmäßig verteilen kann und nicht vorzeitig erstarrt.

Schließlich kann beim erfindungsgemäßen Verfahren das Reaktionsspritzgießverfahren angewendet werden, bei dem ein Mehr-Komponenten-Kunststoff in den Formhohlraum eingebracht wird und in diesem vernetzt. Dieses Verfahren ist beispielsweise für Polyurethane anwendbar.

Die beim Vernetzen von Duroplasten und/oder beim Aufschäumen von Kunststoffen eintretende Volumsvergrößerung kann auch dazu herangezogen werden, den Zuschnitt aus Leder dicht an die ihm zugeordnete Wand der Form anzulegen.

Für nach dem erfindungsgemäßen Verfahren verarbeitbare bzw. in diesem Verfahren verwendbare Kunststoffe sind alle Thermoplaste, Elastoplaste, thermoplastische Kautschuke, wie z. B. Polyurethan, Ionomere, Silikonkautschuk oder Duroplaste, Polyolefine, wie Polyäthylen und Polypropylen sowie Polystyrole und viele andere mehr.

Der nach dem erfindungsgemäßen Verfahren mit dem Zuschnitt aus Leder verbundene Kunststoff kann auch dazu herangezogen werden, mit dem Zuschnitt aus Leder weitere Gegenstände zu verbinden. Derartige Gegenstände können Riemen, Schließen, Schnallen od. dgl. sein.

Weiters ist es möglich, den mit dem Zuschnitt aus Leder verbundenen Kunststoff bei der Ausführung des erfindungsgemäßen Verfahrens zu räumlichen Gebilden zu verformen. Derartige Gebilde können beispielsweise Ösen für die Verbindung von Uhrbändern mit den Stegen an Uhrgehäusen sein. Darüber hinaus ist es möglich, den mit dem Zuschnitt aus Leder nach dem erfindungsgemäßen Verfahren verbundenen Kunststoff unmittelbar zu Schließen oder Schießengegenstücken, die an den Enden der Riemen (Uhrbandteile) vorgesehen sind, zu formen. Bei dieser Variante des erfindungsgemäßen Verfahrens empfiehlt es sich, das Zwei-Komponenten-Spritzgießverfahren anzuwenden, da für den Kunststoff, der mit dem Zuschnitt aus Leder oder lederähnlichem Werkstoff verbunden ist, häufig andere Festigkeits- und Elastizitätseigenschaften gefordert werden als für den Kunststoff, der die Schieße od. dgl. bildet. Beim Zwei-Komponenten-Spritzgießverfahren werden unterschiedliche Kunststoffe, die gegebenenfalls auch unterschiedlich gefärbt sind, oder gleiche Kunststoffe mit unterschiedlicher Farbgebung nacheinander verarbeitet.

Bei der Herstellung von Uhrbändern nach den erfindungsgemäßen Verfahren ist es auch möglich, mit dem Uhrband über den mit dem Zuschnitt aus Leder verbundenen Kunststoff Zierteile oder Federstifte, über welche die Uhrbänder am Uhrgehäuse befestigt werden können, zu verbinden.

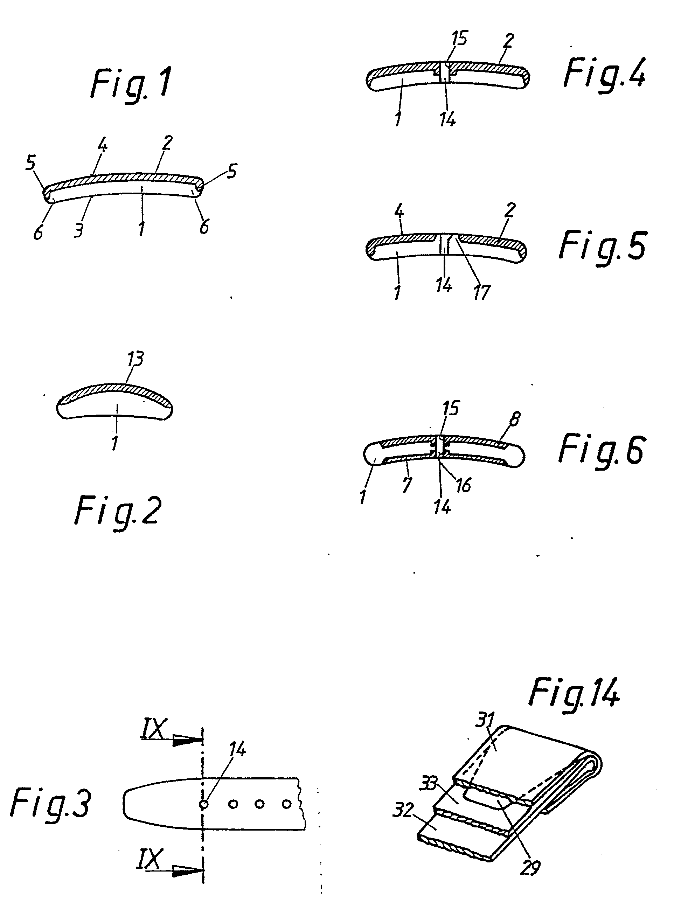

Nachstehend wird als Ausführungsbeispiel die Herstellung des in Figur 1 der angeschlossenen Zeichnungen im Querschnitt gezeigten Uhrbandes im Spritzgießverfahren beschrieben:

In eine Formhälfte einer Spritzgießform wird ein streifenförmiger Zuschnitt 2 aus Leder so in die Form eingelegt, daß sich seine Außenfläche 4 an die Formwand anlegt und durch im Bereich seiner Längsseitenränder 5 angelegte Vakuumöffnungen (beispielsweise ein ringsumlaufender Schlitz) an die Formhälfte angesaugt wird. Das Einlegen des Zuschnitts 2 in den Formhohlraum kann von Hand aus oder mit Hilfe einer Umsetzvorrichtung erfolgen, die den Zuschnitt 2 aus Leder aus einer Schablone mit ebener Auflagefläche oder einem Vorratsmagazin definiert entnimmt und in die Formhälfte einlogt. Diese Verfahrensweise hat den Vorteil, daß der Zuschnitt 2 genau definiert in die Formhälfte eingelegt wird und so das wegen des angelegten Unterdruckes schwierige bzw. überhaupt unmögliche, nachträgliche Zurechtrücken des Zuschnittes 2 entfallen kann. Dann wird die Form geschlossen.

Der die Lage 1 bildende Kunststoff, im vorliegenden Fall ein thermoplastischer Kautschuk (Polyurethan), wird in der Spritzeinheit aufgeschmolzen und in den Schneckenvorraum gefördert, wobei nach Vorhandensein einer ausreichenden Menge an Kunststoff die Schnecke zur Ausführung des Einspritzvorganges axial vorgeschoben und der Formhohlraum mit der Kunststoffschmelze ausgefüllt wird. Die Temperatur des Kunststoffes im Schneckenvorraum (Massetemperatur) beträgt etwa 250° C, die Temperatur des Werkzeuges im Mittel 40° C und der Einspritzdruck, das ist der Druck, mit dem die Schnecke axial beim Einspritzvorgang beaufschlagt wird, beträgt 100 bar.

Nach einer Kühlphase von 10 Sekunden wird die Form geöffnet und das Uhrband bzw. der Uhrbandteil kann entnommen werden, wozu auch ein automatischer Ausstoßer tätig werden kann.

Die Formhälfte, in welche der Zuschnitt aus Leder eingelegt wird, kann gegenüber der anderen Formhälfte quer zur Schließrichtung verschiebbar (Schiebetisch, Rundtisch od. dgl.) sein, um den Einlegevorgang zu vereinfachen.

Ausführungsformen für nach dem erfindungsgemäßen Verfahren herstellbare Uhrbänder und Anschlußteile bzw. Schließen, die mit dem nach dem erfindungsgemäßen Verfahren mit dem Zuschnitt aus Leder verbundenen Kunststoff einstückig und gegebenenfalls im Zwei-Komponenten-Spritzgießverfahren hergestellt werden können, sind in den angeschlossenen Zeichnungen teilweise schematisch dargestellt. Es zeigen

Figuren 1 bis 16 verschiedene Ausführungsformen von Uhrbändern,

Figuren 17 und 18 mit der Lage aus Kunststoff einstückig ausgebildete Anschlußteile,

Figur 19 eine mit der Lage aus Kunststoff einstückig ausgebildete Klappschließe und die

Figuren 20 bis 30 mit der Lage aus Kunststoff einstückig ausgebildete Schließen und Schließengegenstücke.

Ein in Figur 1 im Querschnitt gezeigtes Uhrband besteht aus einer Lage 1 aus Kunststoff, beispielsweise Polyurethan, Polyäthylen, Äthylenvinylacetat, einem thermoplastischen Kautschuk, einem Polyamid od. dgl. elastischen Kunststoffen. Diese Lage 1 ist an ihrer Sichtseite mit einem streifenförmigen Lage 2 aus Leder (Zuschnitt) bedeckt. Wie aus Figur 1 ersichtlich, ist die Außenfläche 3 der Lage 1 in den vom Zuschnitt 2 nicht bedeckten Bereichen desselben mit der Außenfläche 4 des Zuschnittes 2 bündig, so daß sich zwischen den beiden Werkstoffen, aus welchen das Uhrband besteht, keine Stufen ergeben.

Wie aus Figur 1 weiters ersichtlich, sind die Längsränder 5 des Zuschnittes 2 um die Längsseitenränder 6 der Lage 1 aus Kunststoff herumgebogen, wobei die Längsränder 5 aber im Abstand von der Unterseite des Uhrbandes verlaufen.

Figur 1 zeigt schließlich, daß die Längsränder 5 des Zuschnittes 2, der einen länglich-flachen Querschnitt aufweist, spitz zulaufend ausgebildet sind.

Aus Figur 1 ist ersichtlich, daß das Uhrband quer zu seiner Längserstreckung gekrümmt ist. Dabei kann, wie Figur 2 zeigt, eine Ausführungsform gewählt werden, bei der die vom Zuschnitt gebildete Sichtfläche 13 des Uhrbandes einen kleineren Krümmungsradius aufweist als die Unterfläche desselben. Das Uhrband ist also in seiner Längsmitte dicker als an seinen Längsrändern. Diese Ausführungsform kann nach dem erfindungsgemäßen Verfahren ohne weiteres durch eine entsprechende Gestalt des Formhohlraumes erreicht werden.

Sind im erfindungsgemäß herstellbaren Uhrband Löcher 14 (Figur 3) vorgesehen, dann gibt es verschiedene Möglichkeiten, diese auszubilden und nach dem erfindungsgemäßen Verfahren herzustellen.

Bei der in Figur 4 gezeigten Ausführungsform, die vom in Figur 1 gezeigten Uhrband ausgeht, ist der Zuschnitt 2 aus Leder in das Loch 14 hineingezogen, so daß die Wand des Loches 14 zum Teil aus den in das Loch 14 hineingezogenen Bereichen 15 des Zuschnittes 2 besteht. Wie bei allen Ausführungsformen des erfindungsgemäß herstellbaren Uhrbandes ist auch bei dieser Ausführungsform im Bereich des Loches 14 ein stufenloser Übergang zwischen dem Werkstoff des Kunststoffs der Lage 1 und dem Zuschnitt 2 bzw. seinem in das Loch 14 hineingezogenen Bereich 15 vorgesehen.

Eine andere Möglichkeit, wie bei einem erfindungsgemäß herstellbaren Uhrband ein Loch 14 ausgebildet werden kann, zeigt Figur 5. Dort ist im mit der Lage 1 aus Kunststoff verbundenen Zuschnitt 2 ein Loch 17 vorgesehen, dessen Durchmesser größer ist als der Durchmesser des Loches 14 in der Lage 1. Der Kunststoff der Lage 1 erstreckt sich im Bereich des Loches 17 bis zur Außenfläche 4 des Zuschnittes 2 und endet dort mit dieser bündig.

Figur 6 zeigt eine Ausführungsform, bei der sich sowohl der an der Sichtfläche vorgesehene Zuschnitt 8 als auch der an der Unterseite des Uhrbandes vorgesehene Zuschnitt 7 von unten bzw. von oben in das Loch 14 hinein erstrekken. Die in das Loch 14 hineinragenden Bereiche 15 bzw. 16 der Zuschnitte 7 und 8 enden im Abstand voneinander, wobei der zwischen den Enden der Bereiche 15 und 16 angeordnete Kunststoff der Lage 1 mit den Außenflächen der sich in das Loch 14 erstreckenden Bereiche 15 und 16 der Zuschnitte 7 und 8 bündig ist.

Es versteht sich, daß auch Kombinationen der in den Figuren 4 und 5 gezeigten Ausführungsformen möglich sind, wobei beispielsweise an der Unterfläche des Uhrbandes die in Figur 5 gezeigte Ausführungsform und an der Sichtfläche des Uhrbandes die in Figur 4 gezeigte Ausführungsform verwirklicht sein kann.

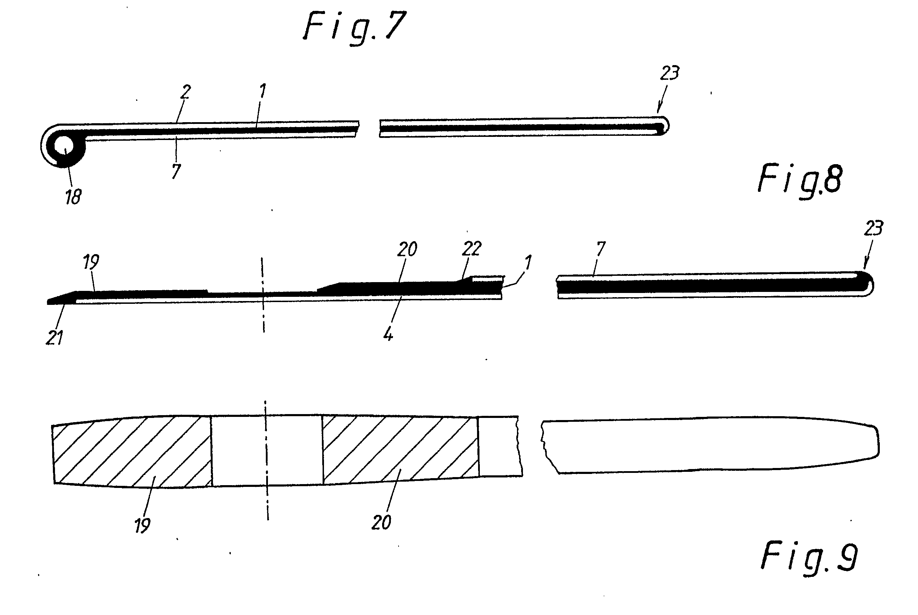

Um die erfindungsgemäß herstellbaren Uhrbänder mit Stiften an Uhrgehäusen oder Schnallen, zu verbinden, können beispielsweise die in Figur 7 oder 8 und 9 gezeigten Ausführungsformen gewählt werden.

Bei der in Figur 7 gezeigten Ausführungsform ist in der Lage 1 aus Kunststoff an einem Ende einstückig eine Öse 18 angeformt, wobei sich der Zuschnitt 2 an der Sichtfläche des Uhrbandes wenigstens teilweise um die Öse 18 herum erstreckt, wogegen der an der Unterfläche des Uhrbandes vorgesehene Zuschnitt 7 vor der Öse 18 enden kann.

Bei der in den Figuren 8 und 9 gezeigten Ausführungsform wird eine zur Befestigung des Uhrbandes an Stiften dienende Schlaufe, wie dies an sich bekannt ist, durch Kleben gebildet. Hiezu sind an der Lage 1 aus Kunststoff zwei Klebeflächen 19 und 20 vorgesehen. Das Besondere bei der in Figur 8 gezeigten Ausführungsform besteht darin, daß die Lage 1 im Bereich ihres zur Schlaufenbildung umzuschlagenden Endes stufenweise verjüngt ist, so daß sich bei fertig geklebter Schlaufe keine nennenswerte Verdikkung des Uhrbandes ergibt. Dadurch, daß das freie Ende 21 der Lage 1 abgeschrägt ist und am Beginn der Klebefläche 20 eine entsprechende Schrägfläche 22 vorgesehen ist, ergibt sich überdies ein weitestgehend stufenfreier Übergang zwischen dem an der Innenfläche des Uhrbandes vorgesehenen Zuschnitt 7 und dem umgeschlagenen Bereich des Uhrbandes.

Sowohl in Figur 7 als auch in Figur 8 ist angedeutet, daß sich der an der Sichtfläche des Uhrbandes vorgesehene Zuschnitt 4 um das freie Ende 23 der Lage 1 herum erstrekken kann und dort im Abstand von der Unterfläche endet, wogegen der Zuschnitt 7 knapp vor dem Ende 23 der Lage 1 endet.

Gemäß einer weiteren Ausführungsform kann der Zuschnitt 2 auf der Oberseite der Lage 1 und der Zuschnitt 7 auf der Unterseite aus einem einzigen Zuschnitt bestehen, der im Bereich der Öse 18 abgebogen ist. In diesem Fall ergibt sich im Ösenbereich eine Ausbildung, die Figur 7 ähnlich ist, wobei jedoch der Zuschnitt 2 einstückig in den Zuschnitt 7 übergeht.

Ein Vorteil des erfindungsgemäßen Verfahrens besteht auch darin, daß man auch mit Zuschnitten aus Leder, die überall die gleiche Stärke besitzen, beispielsweise keilförmige Riemen, d. h. Riemen, die von einem zum anderen Ende hin dünner werden, einfach dadurch herstellen kann, daß man eine entsprechend keilförmige Lage 1 formt.

Darüber hinaus lassen sich bei Verwendung entsprechender Formen nach dem erfindungsgemäßen Verfahren auch bei Verwendung von Streifen, die überall gleich stark sind, beliebige Oberflächenstrukturen erzeugen. Das mühsame und zeitaufwendige Zurichten (Verdünnen und Anschärfen) von Leder entfällt dann.

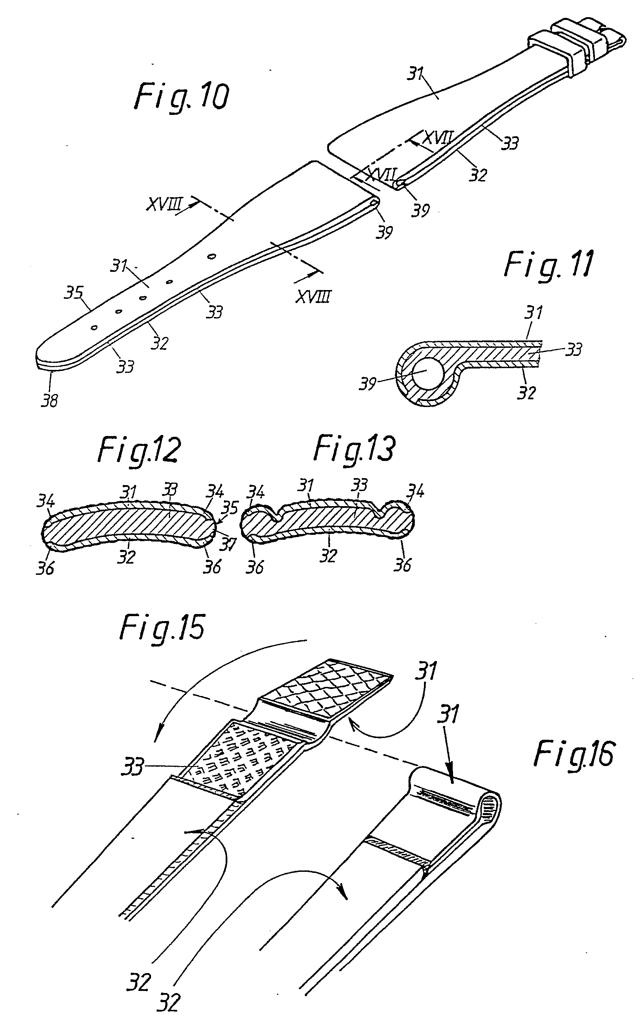

Das in Figur 10 gezeigte, zweiteilige Uhrband besteht in beiden Bandteilen aus einem das Oberleder bildenden Zuschnitt 31 und einen das Futterleder bildenden Zuschnitt 32. Die Zuschnitte 31 und 32 sind miteinander über eine Lage 33 aus elastischem Kunststoff verbunden.

Wie aus Figur 12 ersichtlich, sind die längslaufenden Kanten 34 des Zuschnittes 31 im Bereich der Längsränder 35 des Uhrbandes nach unten und die Längsränder 36 des Zuschnittes 32 nach oben abgebogen. Die Längsränder 34 und 36 berühren einander nicht, sondern enden im Abstand voneinander, wobei der Raum zwischen den Längsrändern 34 und 36 von der Lage 33 ausgefüllt ist. Es werden also die äußersten Kanten 37 der Längsränder 35 des Uhrbandes von der Lage 33 gebildet.

Der die Lage 33 bildende Kunststoff erstreckt sich von der Faserseite (Fleischseite) her sowohl in den Zuschnitt 31 als auch in den Zuschnitt 32, so daß die Zuschnitte 31 und 32 insbesondere im Bereich der Längsränder 35 von ihrer Innenseite (Faserseite) her imprägniert und mit der Lage 33 formschlüssig verbunden sind.

Bei der Ausführungsform gemäß Figur 12 und der Ausführungsform gemäß Figur 13, in welcher das Uhrband durch im Bereich des das Oberleder bildenden Zuschnittes 31 vorgesehene längslaufende Nuten quer profiliert ist, übergreifen die Ränder 34 bzw. 36 jeweils etwa ein Drittel der Gesamtbreite der Längsränder 35.

Im Zusammenhang mit Figur 13 ist noch darauf hinzuweisen, daß die Profilierung des Uhrbandes erreicht wird, ohne daß der das Oberleder bildende Zuschnitt 31 besonders bearbeitet werden muß bzw. verschiedene Dicken aufzuweisen braucht.

Eine ähnliche Ausbildung, wie sie für die Längsränder 35 beschrieben wurde, ist auch im Bereich des spitzen bzw. abgerundeten Endes 38 des Uhrbandes und im Bereich der Ösen 39 möglich. Wie insbesondere Figur 11 zeigt, umgreifen die Zuschnitte 31 und 32 die Öse 39 nur teilweise, wobei der zwischen ihnen verbleibende Freiraum vom Kunststoff der Lage 33 ausgefüllt ist.

Neben der in Figur 11 gezeigten Öse 39 können zur Befestigung der erfindungsgemäß herstellbaren Uhrbänder auch Schlaufenausbildungen bzw. Haken vorgesehen sein. Verschiedene Möglichkeiten hiefür sind in den Figuren 14 bis 29 gezeigt.

Figur 14 zeigt eine schlaufenartige Ausbildung, bei der die Schlaufe durch eine eingelegte Blattfeder 29 elastisch ausgebildet ist, so daß die Schlaufe nicht mehr durch Kleben fixiert werden muß. Die Blattfeder, die beispielsweise im wesentlichen U-förmig ausgebildet sein kann, wird gleich bei der Erzeugung des Uhrbandes mit eingebaut und kann beispielsweise die aus der EP-A-0 096 682 bekannte Form haben.

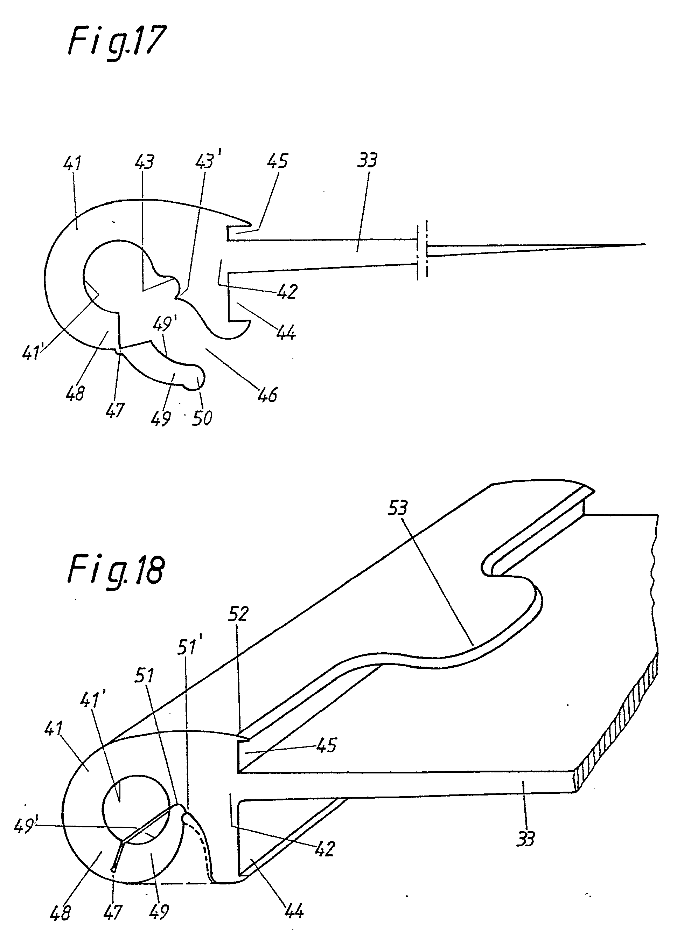

Die Figuren 15 und 16 zeigen eine praktische Ausführungsformen für Klebeschlaufen an erfindungsgemäß herstellbaren Uhrbändern.

Ein in den Figuren 17 und 18 gezeigter, zu einer Öse schließbarer Haken besteht aus dem eigentlichen Haken 41, von dessen Wurzel 42 die Lage 33 aus Kunststoff ausgeht.

Die Zuschnitte 31 und 32 enden bei einem mit dem in den Figuren 17 und 18 gezeigten Haken 41 versehenen Uhrband in den Ausnehmungen 44 bzw. 45 der Hakenwurzel 42. Es ist aber auch möglich, daß insbesondere der das Oberleder bildende Zuschnitt 31 den Haken 41 vollständig verkleidet.

Das Maul des Hakens 41 ist durch einen über ein Filmscharnier 47 mit dem freien Ende des Hakens 41 verbundenen Schließteil 49 verschließbar (vgl. Figur 18). Das freie Ende des Schließteiles 49 trägt eine wulstartige Nase 50, die in eine Nut 43 an der Hakenwurzel 42, deren äußerer Rand 43' widerhakenartig ausgebildet sein kann, einschnappbar ist. Insbesondere aus Figur 18 ist ersichtlich, daß der Haken 41 nach dem Einrasten des Schließteiles 49 vollkommen geschlossen ist, so daß beispielsweise ein Stift einer Uhr von allen Seiten umfaßt wird.

Der Schließteil 49 kann auch, wie in Fig. 18 strichliert angedeutet, profiliert sein, so daß der geschlossene Haken 41 beidseitig vollkommen glatte Oberflächen aufweist.

In Figur 18 ist noch angedeutet, daß die die Ausnehmung 35 an der Hakenwurzel 42 begrenzende Rippe 52 eine Verbreiterung 53 besitzen kann, auf welcher Initialien oder sonstige Symbole angebracht werden können. An Stelle einer bereichsweisen Verbreiterung der Rippe 52 kann diese auch durchgehend breiter ausgebildet sein.

Die Innenfläche 49' des Schließteiles 49 kann den gleichen Krümmungsradius wie die Innenflächen 41' des Hakens 41 aufweisen, wobei die Krümmungsmittelpunkte (bzw. -achsen) bei geschlossenem Haken 41 zusammenfallen, wie dies in Figur 31 gezeigt ist.

Die Lage aus Kunststoff, beispielsweise die Lage 1 oder 33 eines erfindungsgemäß herstellbaren Uhrbandes, kann auch mit einer Klappschließe verbunden oder aber, was mit dem erfindungsgemäßen Verfahren leicht möglich ist, unmittelbar als Klappschließe ausgebildet sein.

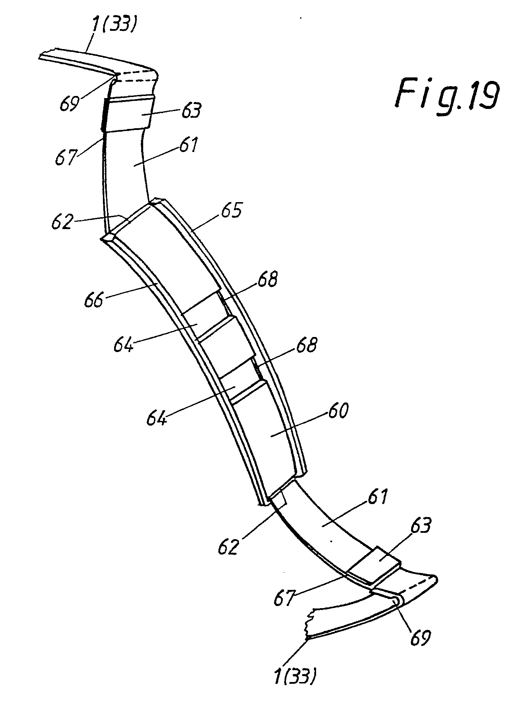

Eine Ausführungsform einer Klappschließe ist in Figur 19 gezeigt. Bei dieser Ausführungsform sind mit einem länglichen Teil 60 zwei Klappteile 61 über Filmscharniere 62 verschwenkbar verbunden. An den Längsseitenrändern des länglichen Teils 60 sind längslaufende Rippen 65 und 66 angeformt, zwischen welchen die Klappteile 61 in ihrer auf den länglichen Teil 60 niedergeklappten Stellung aufgenommen sind. Vorzugsweise sind die Außenflächen der Klappteile 61, d.h. ihre konvex gekrümmten Flächen mit den parallel zum länglichen Teil 60 verlaufenden Flächen der Rippen 65 und 66 bündig.

Jeder Klappteil 61 trägt an sich angeformt einen Vorsprung 63. Die Vorsprünge 63 greifen bei auf den länglichen Teil 60 niedergeklappten Klappteilen 61 in im Klappteil 60 vorgesehene Ausnehmungen 64 ein. Auf diese Weise sind die Filmscharniere 62 bei geschlossener Klappschließe zugentlastet.

Um die verschwenkbaren Klappteile 61 in ihrer auf den länglichen Teil 60 niedergeklappten Schließstellung zu halten, tragen die an den Klappteilen 61 angeformten Vorsprünge 63 an ihren Seitenflächen vorspringende Rippen 67, die vorzugsweise einen im wesentlichen dreieckförmigen Querschnitt aufweisen. Diese Rippen 67 rasten in der Schießstellung in im Bereich der Längsseiten der Ausnehmungen 64 unter den längslaufenden Rippen 65 und 66 eingeformte Nuten 68 ein.

Von den freien Enden der Klappteile 61 gehen die Lagen 1 bzw. 33 aus, wobei zwischen den Klappteilen 61 und den Lagen 1 oder 33 aus Kunststoff Filmscharniere 69 vorgesehen sind.

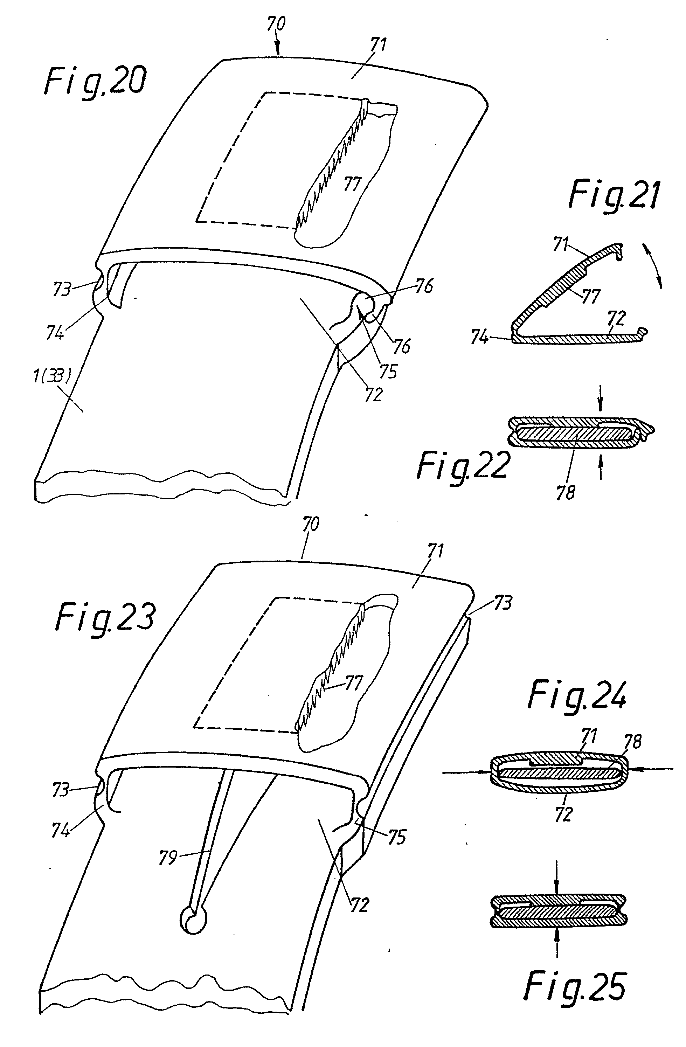

An den Lagen 1 bzw. 33 aus Kunststoff der erfindungsgemäß herstellbaren Uhrbänder können mit diesen einstückige Schließen angeformt werden. Verschiedene Ausführungsformen solcher Schließen sind in den Figuren 20 bis 30 gezeigt.

Ein Schließenkörper 70 (Fig. 20) ist am freien Ende der aus elastischem Kunststoff bestehenden Lage 1 oder 33, die eine Lage eines Uhrbandes bildet, vorgesehen.

Wie aus Figur 20 ersichtlich, ist der Schließenkörper 70 mit der Lage 1 bzw. 33 einstückig ausgebildet.

Der Schließenkörper 70 besitzt eine obere Wand 71 und eine Basiswand 72. Im gezeigten Ausführungsbeispiel ist die obere Wand 71 gegenüber der Basiswand 72 um ein Filmscharnier 73 im Bereich der Seitenwand 74 des Schließenkörpers 70 hochklappbar (vgl. Figur 21).

Die der Seitenwand 74 gegenüberliegende Seitenwand 75 des Schließenkörpers 70 ist als Schnappverschluß ausgebildet und besteht aus zwei miteinander verrastbaren Längsrippen 75 und 76.

An der Unterseite der oberen Wand 71 ist der Schließenkörper 70 mit einer Zahnung 77 versehen. Die Zahnung 77 liegt bei geschlossenem Schließenkörper 70 gegen die Oberseite des Riemens 78, der im Schließenkörper 70 zu befestigen ist, an (Figur 22). Die Oberseite des Riemens 78 ist mit einer der Zahnung 77 entsprechend gegengleichen Profilierung versehen.

Die in Figur 23 gezeigte Ausführungsform der erfindungsgemäß herstellbaren Schließe entspricht mit der Ausnahme, daß die Seitenwand 75 nicht als Schnappverbindung ausgebildet, sondern so wie die Seitenwand 74 als einstückig durchgehende Wand ausgebildet ist, der in Figur 20 gezeigten Ausführungsform. Bei der in Figur 23 gezeigten Ausführungsform wird das im Schließenkörper 70 festzulegende Ende des Riemens 78, wie in Figur 25 gezeigt, durch die Eigenspannung des Schließenkörpers 70 festgehalten. Bei Druck auf die Seitenflächen 74 und 75 (vgl. Figur 24) vergrößert sich der Abstand zwischen der oberen Wand 71 und der Basiswand 72, so daß das Ende des Riemens 78 aus dem Schließenkörper 70 herausgezogen werden kann. Um diese Verformung des Schließenkörpers 70 zu erleichtern, ist in der Basiswand 72 ein in Riemenlängsrichtung verlaufender Schlitz 79 vorgesehen.

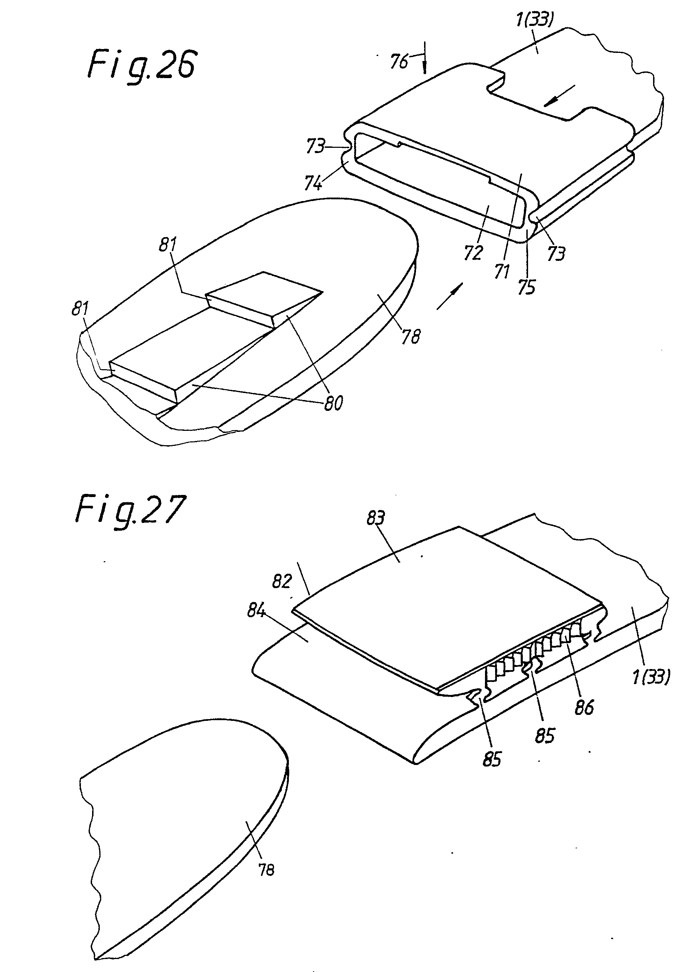

Die in Figur 26 gezeigte Ausführungsform einer Schließe besitzt wieder einen Schließenkörper 70 aus einer Basiswand 72 und einer oberen Wand 71, wobei beide Wände über Biegestellen 73 aufweisende Seitenwände 74 und 75 miteinander einstückig verbunden sind. Das zu befestigende Ende des Uhrbandes 78 besitzt auf seiner Oberseite wenigstens eine, vorzugsweise aber mehrere keilförmige Erhöhungen 80, deren in Einschubrichtung hinteren Flächen 81 als Anschlagflächen dienen.

Die in Figur 27 gezeigte Ausführungsform einer Schließe besitzt einen Schließenkörper 82 aus einer oberen Wand 83 und einer Basiswand 84, die miteinander über Stege 85, die elastisch verformbar sind, verbunden sind. Bei Bewegung der Wand 83 wird der Abstand zwischen den einander zugekehrten Flächen der Wände 83 und 84 vergrößert. Um die Verschiebung der oberen Wand 83 zu erleichtern, ist diese im Bereich ihrer beiden Seitenflächen mit Rippen 86 od. dgl. ausgerüstet. Die Wände 83 und/oder 84 und gegebenenfalls das Uhrband 78 können zur Erhöhung der Zugfestigkeit der Schließe aufgerauht und/oder mit formschlüssigen Anordnungen ausgerüstet sein.

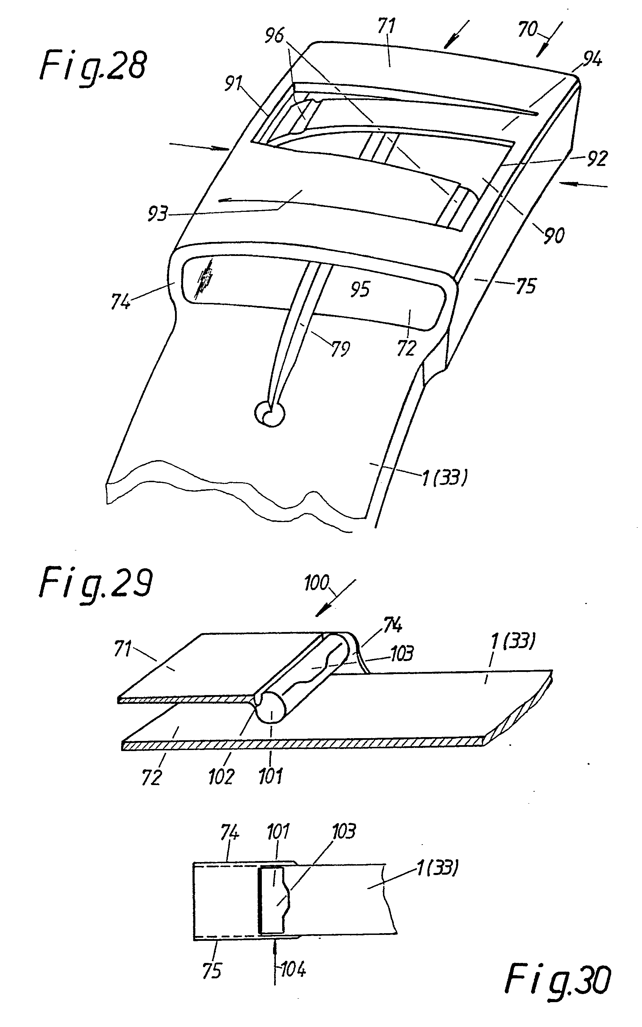

Bei der in Figur 28 gezeigten Ausführungsform besteht der Schließenkörper 70 aus einer oberen Wand 71, einer Basiswand 72 und zwei die Wände miteinander einstückig verbindenden Seitenwände 74 und 75. Auch bei dieser Ausführungsform ist der Schließenkörper 70 mit der Lage 1 bzw. 33 aus elastischem Kunststoff einstückig ausgebildet.

In der oberen Wand 71 der Schließe 70 gemäß Figur 28 ist eine Ausnehmung 90 vorgesehen. Von dieser Ausnehmung 90 gehen von einander gegenüberliegenden Rändern 91 und 92 Klemmleisten 93 und 94 aus, welche die Öffnung 95 des Schließenkörpers 70 im wesentlichen diagonal queren. Wie Figur 28 zeigt, sind in den Klemmleisten 93 und 94 Biegestellen 96 vorgesehen. Durch Drücken auf die Seitenwände 74 und 75 des Schließenkörpers 70 knicken die Klemmleisten 93 und 94 unter gleichzeitiger Verkleinerung des Schlitzes 79 ab und geben das im Schließenkörper 70 geklemmte Uhrband 78 frei.

Auch bei dieser Ausführungsform kann das Uhrband 78 an wenigstens seiner den Klemmleisten 93 und 94 zugekehrten Fläche reibungserhöhend ausgestaltet sein. Darüber hinaus kann zusätzlich oder alternativ die Oberseite der Basiswand 72 und/oder die diesem zugekehrte Unterseite des Uhrbandes 78 reibungserhöhend ausgestaltet sein.

Bei der in den Figuren 29 und 30 gezeigten Ausführungsform trägt der Schließenkörper 100 an seiner oberen Wand 71 über ein Filmscharnier 102 eine verschwenkbare Exzenternocke 101. Zur Betätigung der Exzenternocke 101 ist diese mit einem Vorsprung 103 ausgerüstet. Die Anordnung kann dabei so getroffen sein, daß die Exzenternocke 101 in entspannter Lage von der Oberseite der Basiswand 71 des Schließenkörpers 100 einen Abstand aufweist, der kleiner ist als die Dicke des zu befestigenden Endes des Uhrbandes 78, so daß die Exzenternocke 101 unter elastischer Vorspannung gegen die Oberseite des Uhrbandes anliegt. Bei Zug im Sinne einer Öffnung der Schließe 100 keilt sich die Exzenternocke 101 gegen die Oberseite des Uhrbandes 78, so daß dieses geklemmt wird.

Der Anpreßdruck der Exzenternocke 101 an das im Schließenkörper 100 festzulegende Ende des Riemens 78 kann zusätzlich oder alternativ zu einer elastischen Vorspannung im oben beschriebenen Sinne auch durch eine Verrastung der Exzenternocke 101 an einer oder beiden Seitenwänden 74, 75 des Schließenkörpers 100 erreicht werden, wie dies in Figur 30 durch Rastmittel 104 angedeutet ist.

**Patentansprüche**

1. Verfahren zur Herstellung von Uhrbändern bzw. Uhrbandteilen, die wenigstens eine Lage (2, 7, 8, 31, 32) aus Leder und eine mit dieser Lage verbundene Lage (1, 33) aus Kunststoff aufweisen, wobei man die Lage aus Leder in Form eines Zuschnittes (2, 7, 8, 31, 32), dessen Umrißform der Umrißform der Ränder (5, 34, 36) des herzustellenden Uhrbandes entspricht, einschließlich seiner Ränder (5, 34, 36) innerhalb des Hohlraumes einer Form anordnet und in der Form durch Ansaugen an einer Wand des Formhohlraums festhält, wobei man den Zuschnitt (2, 7, 8, 31, 32) im Formhohlraum mit dem Kunststoff verbindet, indem man in den Formhohlraum einen Kunststoff in fließfähigem Zustand oder in festem Zustand, vorzugsweise als Vorformling, den man wenigstens im Bereich seiner Oberfläche in einen plastischen Zustand überführt, einbringt und in den Zuschnitt (2, 7, 8, 31, 32) teilweise eindringen läßt, und wobei man den Kunststoff um die Ränder (5, 34, 36) des Zuschnitts (2, 7, 8, 31, 32) herumformt, dadurch gekennzeichnet, daß man dem Zuschnitt (2, 7, 8, 31, 32) durch das Ansaugen an die Wand des Formhohlraumes und durch den in den Formhohlraum eingebrachten Kunststoff die im Uhrband vorliegende räumliche Querschnittsform erteilt, daß man die Ränder (5, 34, 36) des Zuschnittes (2, 7, 8, 31, 32) durch Ansaugen an eine Wand des Formhohlraumes an dieser Wand des Formhohlraumes festhält, und daß man den Kunststoff (1, 33) so um die Ränder (5, 34, 36) des Zuschnittes (2, 7, 8, 31, 32) herumformt, daß die Ränder (35) des Uhrbandes teils durch den Zuschnitt (2, 7, 8, 31, 32) und teils vom Kunststoff (1, 33) gebildet werden, und die Außenfläche (4) des Zuschnittes (2, 7, 8, 31, 32) mit der Außenfläche (3) des Kunststoffes (1, 33) bündig verläuft.

2. Verfahren nach Anspruch 1, dadurch gekennzeichnet, daß man den Kunststoff (1, 33) an wenigstens einem Ende des Uhrbandes zu einer quer zur Längserstreckung des Uhrbandes verlaufenden Öse (18, 39) formt.

3. Verfahren nach Anspruch 1, dadurch gekennzeichnet, daß man den Kunststoff (1, 33) an einem Ende des Uhrbandes zu einer Schließe (70, 82, 100) und am anderen Ende zu einem Schließengegenstück (80) formt.

4. Verfahren nach Patentanspruch 1, dadurch gekennzeichnet, daß man einen vernetzbaren Kunststoff in Form eines fließfähigen Präpolymeren oder Monomeren in den Formhohlraum einbringt.

5. Verfahren nach Patentanspruch 1, dadurch gekennzeichnet, daß man einen thermoplastischen Kunststoff mit einer Temperatur zwischen 100 und 300°C, vorzugsweise 200°C, in den Formhohlraum einbringt.

6. Verfahren nach einem der Patentansprüche 1 bis 5, dadurch gekennzeichnet, daß man den Zuschnitt (2,7,8, 31,32) aus Leder mit einem Haftvermittler, der dem zu verarbeitenden Kunststoff angepaßt ist, vorbehandelt.

7. Verfahren nach einem der Patentansprüche 1 bis 6, dadurch gekennzeichnet, daß man in den Formhohlraum vorzugsweise nacheinander in verschiedene Bereiche unterschiedliche Kunststoffe, z.B. Kunststoffe unterschiedlicher Elastizität und/oder Farbe einbringt.

8. Verfahren nach einem der Patentansprüche 1 bis 7, dadurch gekennzeichnet, daß man den Kunststoff beim Einbringen in den Formhohlraum zur Bildung von Anschlußteilen, Schließen od.dgl. zu einem räumlichen Gebilde formt.

9. Verfahren nach einem der Patentansprüche 1 bis 8, dadurch gekennzeichnet, daß man die Temperatur der Form konstant hält, wobei eine Temperatur von 120°C, vorzugsweise 40°C, nicht überschritten wird.

10. Verfahren nach einem der Patentansprüche 1 bis 9, dadurch gekennzeichnet, daß man einen Kunststoff, insbesondere einen Duroplasten verwendet, dem ein Treibmittel zur Aufschäumung des Kunststoffes beigemischt ist.

**Claims**

1. Process for manufacturing watch straps or watch strap pieces, which have at least one layer (2,7,8,31,32) made of leather and, connected thereto, one layer (1,33) made of plastic, whereby the layer of leather, in the form of a cut piece (2, 7,8,31,32) whose contour shape corresponds to the contour shape of the edges (5,34,36) of the watch strap to be manufactured, is with its edges (5,34,36) disposed inside the cavity of a mould and is held securely in the mould by being sucked against a wall of the mould cavity, whereby the cut piece (2,7,8,31,32) is joined in the mould cavity to the plastic by introducing into the mould cavity a plastic in a flowable state or in a solid state, preferably as a preform which is converted at least in the region of its surface into a plastic state, and allowing it to penetrate partially into the cut piece (2,7,8,31,32), and whereby the plastic is moulded around the edges (5,34,36) of the cut piece (2,7,8,31,32), characterised in that the three-dimensional cross-sectional shape in the watch strap is imparted to the cut piece (2,7,8,31,32) by the suction against the wall of the mould cavity and by the plastic introduced into the mould cavity, that the edges (5,34, 36) of the cut piece (2,7,8,31,32) are held through suction towards a wall of mould cavity securely against said wall of the mould cavity, and that the plastic (1, 33) is moulded around the edges (5, 34, 36) of the cut piece (2, 7, 8, 31, 32) in such a manner, that the edges (35) of the watch strap are formed partly by the cut piece (2,7,8,31,32) and partly by the plastic (1,33), and the outer surface (4) of the cut piece (2,7,8,31,32) extends flush with the outer surface (3) of the plastic (1,33).

2. Process according to claim 1, characterised in that the plastic (1,33) is moulded at at least one end of the watch strap into an eye (18,39) extending transversely to the longitudinal extension of the watch strap.

3. Process according to claim 1, characterised in that the plastic (1,33) is moulded at one end of the watch strap into a closure (70,82,100) and at the other end into a closure counterpart (80).

4. Process according to claim 1, characterised in that a curable plastic in the form of a flowable prepolymer or monomer is introduced into the mould cavity.

5. Process according to claim 1, characterised in that a thermoplastic plastic is introduced into the mould cavity at a temperature between 100 and 300° C, preferably 200° C.

6. Process according to one of claims 1 to 5, characterised in that the cut piece (2, 7,8,31,32) made of leather is pretreated with a coupling agent which is matched to the plastic to be processed.

7. Process according to one of claims 1 to 6, characterised in that different plastics, e.g. plastics of differing elasticity and/or colour, are introduced preferably successively into different regions of the mould cavity.

8. Process according to one of claims 1 to 7, characterised in that the plastic, on introduction into the mould cavity, is moulded into a three-dimensional formed body to form connection pieces, closures or the like.

9. Process according to one of claims 1 to 8, characterised in that the temperature of the mould is kept constant, with a temperature of 120° C, preferably 40° C, not being exceeded.

10. Process according to one of claims 1 to 9, characterised in that a plastic, in particular a thermosetting plastic, is used, to which is added a raising agent for expanding the plastic.

## Revendications

1. Procédé de fabrication de bandes de bracelet de montre ou d'éléments de bandes de bracelet de montre qui comportent au moins une couche (2, 7, 8, 31, 32) en cuir et une couche (1, 33) en matière synthétique reliée à cette couche, dans lequel on dispose la couche de cuir sous la forme d'une pièce découpée (2, 7, 8, 31, 32), dont la forme de contour correspond à la forme de contour des bords (5, 34, 36) de la bande de montre à fabriquer y compris ses bords (5, 34, 36), à l'intérieur de la cavité d'un moule et on le maintient fixement dans le moule par aspiration contre une paroi de la cavité de moule, auquel cas on relie la pièce découpée (2, 7, 8, 31, 32) dans la cavité de moule à la matière synthétique par le fait qu'on introduit, dans la cavité de moule, une matière synthétique à l'état fluide ou à l'état solide, de préférence en tant que préforme, qu'on amène à un état plastique au moins au voisinage de sa surface et qu'on laisse pénétrer partiellement dans la pièce découpée (2, 7, 8, 31, 32) et où on conforme la matière synthétique autour des bords (5, 34, 36) de la pièce découpée (2, 7, 8, 31, 32), caractérisé en ce qu'on impartit, à la pièce découpée (2, 7, 8, 31, 32) par l'aspiration contre la paroi de la cavité de moule et par la matière synthétique introduite dans la cavité de moule, la forme de section transversale dans l'espace présente dans la bande de montre, en ce que, par aspiration contre une paroi de la cavité de moule, on maintient les bords (5, 34, 36) de la pièce découpée (2, 7, 8, 31, 32) fixement contre cette paroi de la cavité de moule et en ce qu'on conforme la matière synthétique (1, 33) de telle façon autour des bords (5, 34, 36) de la pièce découpée (2, 7, 8, 31, 32) que les bords (35) de la bande de montre soient formés en partie par la pièce découpée (2, 7, 8, 31, 32) et en partie par la matière synthétique (1, 33) et la face externe (4) de la pièce découpée (2, 7, 8, 31, 32) soit en affleurement avec la face extérieure (3) de la matière synthétique (1, 33).

2. Procédé selon la revendication 1, caractérisé en ce qu'on conforme la matière synthétique (1, 33) à au moins une extrémité de la bande de montre en un oeillet (18, 39) s'étendant transversalement à l'étendue longitudinale de la bande de montre.

3. Procédé selon la revendication 1, caractérisé en ce qu'on conforme la matière synthétique (1, 33) à une extrémité de la bande de montre en un fermoir (70, 82, 100) et à l'autre extrémité en une contre-pièce de fermoir (80).

4. Procédé selon la revendication 1, caractérisé en ce qu'on introduit une matière synthétique réticulable sous forme d'un prépolymère ou monomère fluide dans la cavité de moule.

5. Procédé selon la revendication 1, caractérisé en ce qu'on introduit une matière synthétique thermoplastique à une température entre 100 et 300°C, de préférence de 200°C dans la cavité de moule.

6. Procédé selon l'une des revendications 1 à 5, caractérisé en ce qu'on traite préalablement la pièce découpée (2,7,8,31, 32) en cuir par un agent adhésif qui est adapté à la matière synthétique à travailler.

7. Procédé selon l'une des revendications 1 à 6, caractérisé en ce qu'on introduit, dans la cavité de moule de préférence successivement dans des zones différentes, des matières synthétiques différentes, par exemple des matières synthétiques d'élasticité et/ou de couleur différente.

8. Procédé selon l'une des revendications 1 à 7, caractérisé en ce qu'on conforme la matière synthétique, lors de l'introduction dans la cavité de moule pour la formation d'éléments de raccordement, de fermoirs ou analogues, en un produit tridimensionnel.

9. Procédé selon l'une des revendications 1 à 8, caractérisé en ce qu'on maintient constante la température du moule, une température de 120°C, de préférence de 40°C n'étant pas dépassée.

10. Procédé selon l'une des revendications 1 à 9, caractérisé en ce qu'on utilise une matière synthétique, en particulier une matière thermodurcissable à laquelle est ajouté en mélange un agent moussant pour le moussage de la matière synthétique.

Fig.1

Fig.2

Fig.3

Fig.4

Fig.5

Fig.6

Fig.14

EP 0 199 708 B1

# Fig.7

# Fig.8

# Fig.9

Fig. 10

Fig. 11

Fig.12

Fig.13

Fig.15

Fig.16

13

# Fig.17

# Fig.18

Fig.19

Fig.20

70

71

77

73

74

1(33)

76

76

75

72

Fig.21

71

77

74

72

Fig.22

78

70

71

73

Fig.23

77

73

74

79

75

72

Fig.24

71

78

72

Fig.25

Fig.26

Fig.27

Fig.28

Fig.29

Fig.30